(19) **Europäisches Patentamt**
**European Patent Office**
**Office européen des brevets**

(11) **EP 4 509 940 A1**

(12) **EUROPEAN PATENT APPLICATION**
published in accordance with Art. 153(4) EPC

(43) Date of publication:
**19.02.2025 Bulletin 2025/08**

(21) Application number: **23788110.7**

(22) Date of filing: **15.03.2023**

(51) International Patent Classification (IPC):
**G05D 23/00** (2006.01)

(52) Cooperative Patent Classification (CPC):
**G05D 23/1931**

(86) International application number:
**PCT/JP2023/010148**

(87) International publication number:
**WO 2023/199688 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.04.2022 JP 2022066878**

(71) Applicant: **Panasonic Energy Co., Ltd.
Osaka 570-8511 (JP)**

(72) Inventors:
• **HOJO, Satoaki
Osaka 571-0057 (JP)**
• **AKIMOTO, Yudai
Osaka 571-0057 (JP)**

(74) Representative: **Eisenführ Speiser
Patentanwälte Rechtsanwälte PartGmbB
Postfach 10 60 78
28060 Bremen (DE)**

(54) **TEMPERATURE CONTROL DEVICE AND TEMPERATURE CONTROL METHOD**

(57) This temperature control device 100 controls the temperature $T_{H\text{-}out}$ of a to-be-temperature-adjusted medium H which is discharged from a heat exchanger 10 through heat exchange between the to-be-temperature-adjusted medium H and a heat medium C in the heat exchanger 10. The temperature control device 100 adjusts a temperature SV on the basis of

formula (1): $T_{H\text{-}in} - R = E \times (T_{H\text{-}in} - SV)$

[in formula (1), $T_{H\text{-}in}$ is the temperature of the to-be-temperature-adjusted medium H supplied to the heat exchanger 10, R is the target temperature of the to-be-temperature-adjusted medium H discharged from the heat exchanger 10, E is the heat exchange rate of the heat exchanger 10, and SV is the temperature of the heat medium C supplied to the heat exchanger 10].

EP 4 509 940 A1

FIG. 1

**Description**

TECHNICAL FIELD

The present disclosure relates to a temperature control apparatus and a temperature control method.

BACKGROUND ART

Conventionally, it is known that the feedforward control scheme is used to control the temperature of a medium subject to temperature control by using a heat exchanger (see, for example, Patent Literature 1). According to the feedforward control scheme, the speed of response can be increased as compared to the feedback control scheme.

RELATED-ART LITERATURE

PATENT LITERATURE

Patent Literature 1: JP 2003-313204

SUMMARY OF INVENTION

TECHNICAL PROBLEM

In conventional temperature control, a logarithmic average temperature difference, which is common in a basic formula for heat exchange, is used. As a result of repeated intensive studies, we have found that it is difficult to control the temperature with high accuracy by using a logarithmic average temperature difference.
The present disclosure addresses the issue described above, and a purpose thereof is to provide a technology of improving the accuracy of temperature control.

SOLUTION TO PROBLEM

An embodiment of the present disclosure relates to a temperature control apparatus that controls, through heat exchange between a medium subject to temperature control and a heat medium in a heat exchanger, a temperature $T_{H\text{-}out}$ of the medium subject to temperature control discharged from the heat exchanger. The apparatus adjusts a temperature SV based on

$$\text{expression (1): } T_{H\text{-}in} - R = E \times (T_{H\text{-}in} - SV)$$

[in expression (1), $T_{H\text{-}in}$ denotes a temperature of the medium subject to temperature control supplied to the heat exchanger, R denotes a target temperature of the medium subject to temperature control discharged from the heat exchanger, E denotes a heat exchange rate of the heat exchanger, and SV denotes a temperature of the heat medium supplied to the heat exchanger].
Another embodiment of the present disclosure relates to a temperature control method that controls, through heat exchange between a medium subject to temperature control and a heat medium in a heat exchanger, a temperature $T_{H\text{-}out}$ of the medium subject to temperature control discharged from the heat exchanger. The method includes adjusting a temperature SV based on

$$\text{expression (1): } T_{H\text{-}in} - R = E \times (T_{H\text{-}in} - SV)$$

[in expression (1), $T_{H\text{-}in}$ denotes a temperature of the medium subject to temperature control supplied to the heat exchanger, R denotes a target temperature of the medium subject to temperature control discharged from the heat exchanger, E denotes a heat exchange rate of the heat exchanger, and SV denotes a temperature of the heat medium supplied to the heat exchanger].
Optional combinations of the aforementioned constituting elements, and implementations of the present disclosure in the form of methods, apparatuses, and systems may also be practiced as additional modes of the present disclosure.

ADVANTAGEOUS EFFECTS OF INVENTION

According to the present disclosure, the accuracy of temperature control can be improved.

BRIEF DESCRIPTION OF DRAWINGS

[Fig. 1] Fig. 1 is a schematic diagram of a coating apparatus provided with a temperature control apparatus according to the embodiment.
[Fig. 2] Fig. 2 is a flowchart showing an example of temperature control according to the embodiment.
[Fig. 3] Figs. 3A and 3B are diagrams showing the temperature states of the medium subject to temperature control and the heat medium.

DESCRIPTION OF EMBODIMENTS

Hereinafter, the present disclosure will be described based on preferred embodiments with reference to the accompanying drawings. The embodiments are not intended to limit the scope of the present disclosure but exemplify the present disclosure. Not all of the features and the combinations thereof described in the embodiments are necessarily essential to the present disclosure. Identical or like constituting elements, members, processes shown in the drawings are represented by identical symbols and a duplicate description will be omitted as appropriate. The scales and shapes of the parts shown in the figures are defined for convenience's sake to make the explanation easy and shall not be interpreted limitatively unless otherwise specified. Terms like "first", "second", etc. used in the specification and claims do not indicate an order or importance by any means unless specified otherwise and are used to distinguish a certain feature from the others. Those of the members that are not material to the description of the embodiments are omitted in the drawings.

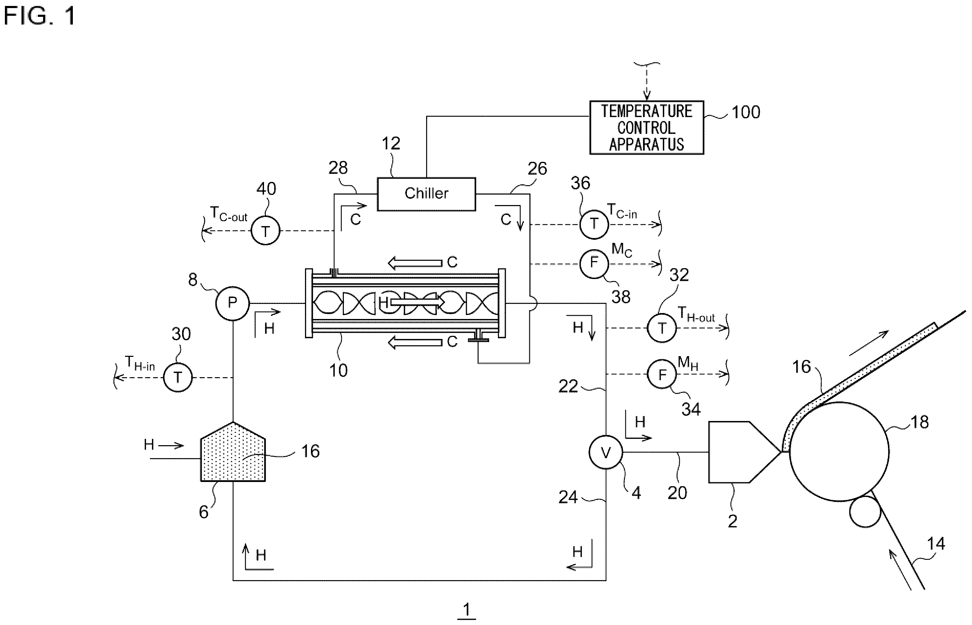

Fig. 1 is a schematic diagram of a coating apparatus 1 provided with a temperature control apparatus 100 according to the embodiment. Fig. 1 depicts the temperature control apparatus 100 as a functional block. The functional blocks may be implemented by an element such as a CPU or memory of a computer or by a circuit as a hardware configuration, and by a computer program or the like as a software configuration. It will be understood by those skilled in the art that the functional block may be implemented in a variety of forms by combinations of hardware and software.

The coating apparatus 1 includes a coating die 2, a valve 4, a tank 6, a pump 8, a heat exchanger 10, a chiller 12, and a temperature control apparatus 100. The coating die 2 is an instrument for applying a paint 16 to a coated body 14. The materials and applications of the coated body 14 and the paint 16 are not particularly limited. The coating die 2 is arranged so that the discharge port faces the circumferential surface of a backup roll 18 at a predetermined distance. By way of one example, the coated body 14 is strip-shaped and is continuously transported by the rotation of the backup roll 18 to a position where the backup roll 18 and the discharge port face each other.

A valve 4 is connected to the coating die 2 via a die supply pipe 20. The valve 4 can switch between supplying and not supplying the paint 16 to the coating die 2. The coating apparatus 1 can discharge the paint 16 from the coating die 2 to the coated body 14 while the paint 16 is being supplied to the coating die 2. That is, the valve 4 can be used to coat the coated body 14 with the paint 16 intermittently.

The tank 6 is connected to the valve 4 via a feed pipe 22 and a return pipe 24. The tank 6 stores the paint 16. The paint 16 is fed to the tank 6 from a paint regulation apparatus (not shown) provided upstream of the coating apparatus 1. A pump 8 is provided in the feed pipe 22. By driving the pump 8, the paint 16 is fed from the tank 6 to the valve 4. The valve 4 supplies the paint 16 supplied from the tank 6 to the coating die 2 via the die supply pipe 20. Alternatively, the valve 4 returns the paint 16 supplied from the tank 6 to the tank 6 via the return pipe 24.

The feed pipe 22 is provided with the heat exchanger 10. The heat exchanger 10 is comprised of a known double pipe heat exchanger by way of one example. Therefore, the heat exchanger 10 has an inner pipe and an outer pipe. The inner pipe is connected to the feed pipe 22, and the paint 16 is distributed in the inner pipe. Further, a static mixer element is built into the inner pipe, and the paint 16 is stirred in the process of passing through the inner pipe. The known chiller 12 is connected to the inlet of the outer pipe via an outbound pipe 26. Further, the chiller 12 is connected to the outlet of the outer pipe via an inbound pipe 28. A heat medium C flows from the chiller 12 into the outer pipe via the outbound pipe 26 and returns to the chiller 12 via the inbound pipe 28 after passing through the outer pipe. The heat medium C is, for example, water.

The heat exchanger 10 of this embodiment is of a counter-flow type in which the flow of the paint 16 and the flow of the heat medium C are substantially opposite but may be of a parallel-flow type in which the flows are substantially in the same direction. Further, the heat exchanger 10 is not limited to a double pipe heat exchanger but may be a known plate heat exchanger, a multi-pipe heat exchanger, an air-cooled heat exchanger, an evaporator or a condenser that induces a phase change, etc. Further, the paint 16 (in other words, a medium H subject to temperature control described later) and the heat medium C distributed in the heat exchanger 10 are liquids by way of one example. However, the paint 16 and the heat medium C are not limited to liquids and may be gases, gas-liquid mixed two-phase flows, liquids that include a phase change, etc.

In the heat exchanger 10, heat is exchanged between the paint 16 and the heat medium C. Therefore, the paint 16 represents the medium H subject to temperature control, i.e., a fluid subject to temperature control in the heat exchanger 10. By way of one example, the medium H subject to temperature control and the heat medium C is such that the medium H subject to temperature control is at a high temperature and the heat medium C is at a low temperature before heat exchange. However, the embodiment is not particularly limited to this configuration, and the temperature relationship between the medium H subject to temperature control and the heat medium C before heat exchange may be opposite.

A first temperature sensor 30 is provided on the upstream side of the heat exchanger 10 in the feed pipe 22. The first temperature sensor 30 measures the temperature $T_{H\text{-}in}$ [°C] of the medium H subject to temperature control supplied to the heat exchanger 10, i.e., the temperature of the medium H subject to temperature control on the inlet side of the inner pipe. A second temperature sensor 32 is provided on the downstream side of the heat exchanger 10 in the feed pipe 22. The second temperature sensor 32 measures the temperature $T_{H\text{-}out}$[°C] of the medium H subject to temperature control discharged from the heat exchanger 10, i.e., the temperature of the medium H subject to temperature control on the outlet side of the inner pipe. Further, a first flow sensor 34 is provided on the downstream side of the heat exchanger 10 in the feed pipe 22. The first flow sensor 34 measures the mass flow rate $M_H$[kg/sec] of the medium H subject to temperature control discharged from the heat exchanger 10.

A third temperature sensor 36 is provided in the outbound pipe 26. The third temperature sensor 36 measures the temperature $T_{c\text{-}in}$[°C] of the heat medium C supplied to the heat exchanger 10, i.e., the temperature of the heat medium C on the inlet side of the outer pipe. Further, a second flow sensor 38 is provided in the outbound pipe 26. The second flow sensor 38 measures the mass flow rate $M_C$[kg/sec] of the heat medium C supplied to the heat exchanger 10. A fourth temperature sensor 40 is provided in the inbound pipe 28. The fourth temperature sensor 40 measures the temperature $T_{C\text{-}out}$[°C] of the heat medium C discharged from the heat exchanger 10, i.e., the temperature of the heat medium C on the outlet side of the outer pipe.

Each temperature sensor can be comprised of a known thermometer. Further, each mass sensor can be comprised of a known mass flow meter. The signal indicating the measurement result of each temperature sensor and each mass sensor is fed to the temperature control apparatus 100. Information on the mass flow rate $M_C$ may be fed from the chiller 12 to the temperature control apparatus 100.

The temperature control apparatus 100 may be comprised of a digital processor. For example, temperature control apparatus 100 may be comprised of a combination of a microcomputer, including a CPU, and a software program. The temperature control apparatus 100 may alternatively be comprised of a FPGA (Field Programmable Gate Array), an ASIC (Application Specified IC), etc. The temperature control apparatus 100 controls the temperature $T_{H\text{-}out}$ of the medium H subject to temperature control through heat exchange between the medium H subject to temperature control and the heat medium C in the heat exchanger 10.

The heat exchanger 10 adjusts, based on the following expression (1), the temperature SV of the heat medium C supplied to the heat exchanger 10 and, in other words, the temperature SV of the heat medium C that is brought into thermal contact with the medium H subject to temperature control. The temperature SV of the heat medium C corresponds to the temperature $T_{C\text{-}in}$ of the heat medium C measured by the third temperature sensor 36. The temperature control apparatus 100 can adjust the temperature SV of the heat medium C fed from the chiller 12 to the heat exchanger 10 by controlling how the chiller 12 is driven. The temperature SV of the heat medium C can also be regarded as the preset temperature of the chiller 12.

$$\text{Expression (1): } T_{H\text{-}in}-R=E\times(T_{H\text{-}in}-SV)$$

Referring to expression (1), $T_{H\text{-}in}$ is the temperature of the medium H subject to temperature control supplied to the heat exchanger 10. As described above, the temperature $T_{H\text{-}in}$ is measured by the first temperature sensor 30. R denotes a target temperature of the medium H subject to temperature control discharged from the heat exchanger 10. The target temperature R is set in advance by the user of the coating apparatus 1, etc. E denotes the heat exchange rate of the heat exchanger 10. The heat exchange rate E[%] is calculated based on the following expression (2) and is repeatedly updated according to a predetermined timing schedule. Expression (2) is a known calculation expression and can be appropriately changed according to the format of the heat exchanger 10.

$$\text{Expression (2):}$$

$$E\times100=[1-\exp\{-NTU(1-Cr)\}]/[1-Cr\exp\{-NTU(1-Cr)\}]$$

Referring to expression (2), NTU denotes the number of transfer units [dimensionless]. The number of transfer units NTU is calculated based on the following expression (3).

$$\text{Expression (3):} \quad NTU = U \times A / C_{min}$$

Referring to expression (3), U denotes the overall heat transfer coefficient [W/m²K]. The overall heat transfer coefficient U is a known coefficient calculated from the thermal resistance of the wall surface sandwiching the medium H subject to temperature control and the heat medium C in the heat exchanger 10, and the thermal resistance, temperature, etc. of the medium H subject to temperature control and the heat medium C. The overall heat transfer coefficient U is calculated each time the heat exchange rate E is calculated. A denotes the heat transfer area [m²] of the heat exchanger 10, which is set in advance. $C_{min}$ denotes the heat capacity flow rate [W/K], which is the heat capacity flow rate $C_H$ of the medium H subject to temperature control or the heat capacity flow rate $C_C$ of the heat medium C, whichever has a smaller value. In this embodiment, the flow capacity flow rate $C_H$ is assumed to be $C_{min}$ by way of one example.

The heat capacity flow rate $C_H$ is calculated based on the following expression (4). Further, the heat capacity flow rate $C_C$ is calculated based on the following expression (5).

$$\text{Expression (4):} \quad C_H = M_H \times Cp_H$$

$$\text{Expression (5):} \quad C_C = M_C \times Cp_C$$

Referring to expression (4), $M_H$ denotes the mass flow rate [kg/sec] of the medium H subject to temperature control. As described above, the mass flow rate MH is measured by the first flow sensor 34. $Cp_H$ denotes the specific heat [J/(kg·K)] of the medium H subject to temperature control, which is set in advance. Referring to expression (5), $M_C$ denotes the mass flow rate [kg/sec] of the heat medium C. As described above, the mass flow rate $M_C$ is measured by the second flow sensor 38. The specific heat $Cp_C$ is the specific heat [J/(kg·K)] of the heat medium C, which is set in advance.

Referring to expression (2), Cr denotes a heat capacity ratio [dimensionless]. The heat capacity ratio Cr is calculated based on the following expression (6)

$$\text{Expression (6):} \quad Cr = C_{min} / C_{max}$$

Referring to expression (6), $C_{min}$ is as described above. $C_{max}$ denotes the heat capacity flow rate [W/K], which is the heat capacity flow rate $C_H$ of the medium H subject to temperature control or the heat capacity flow rate $C_C$ of the heat medium C, whichever has a larger value. In this embodiment, the heat capacity flow rate $C_C$ is assumed to be $C_{max}$ by way of one example.

Expression (1) is based on the basic formula of heat exchange shown in expression (7) below.

$$\text{Expression (7):} \quad C_{min} \times (T_{H-in} - T_{H-out}) = E \times C_{min} \times dT_{max}$$

Referring to expression (7), $C_{min}$, $T_{H-in}$, $T_{H-out}$ and E are as described above. $dT_{max}$ denotes the maximum temperature difference between the medium H subject to temperature control and the heat medium C in the heat exchanger 10, which is calculated based on the following expression (8).

$$\text{Expression (8):} \quad dT_{max} = T_{H-in} - T_{C-in}$$

Referring to expression (8), $T_{H-in}$ and $T_{C-in}$ are as described above. That is, the maximum temperature difference $dT_{max}$ is the difference between the temperature of the medium H subject to temperature control flowing into the heat exchanger 10 and the temperature of the heat medium C flowing into the heat exchanger 10.

When the medium H subject to temperature control is at a higher temperature than the heat medium C, the left side of expression (7) means the amount of heat that the medium H subject to temperature control is deprived of by the heat medium C. Further, the right side of expression (7) means the amount of heat exchange that occurs in the heat exchanger 10. The temperature $T_{H-out}$ of the medium H subject to temperature control can be replaced by a target temperature R. Further, the temperature $T_{C-in}$ of the heat medium C can be replaced by the temperature SV of the heat medium C. Therefore, expression (1) is obtained from expression (7).

The temperature control apparatus 100 receives a measurement result from each temperature sensor and each flow sensor and calculates the heat exchange rate E. The temperature control apparatus 100 then substitutes the measured temperature $T_{H-in}$, the calculated heat exchange rate E, and the preset target temperature R into expression (1) and calculates the temperature SV of the heat medium C. Thereafter, the temperature control apparatus 100 controls the chiller 12 so that the calculated temperature SV results. In this control, the circulating water of the chiller 12 is adjusted to a temperature corresponding to the temperature SV. This realizes feedforward control of causing the temperature $T_{H\text{-out}}$ of the medium H subject to temperature control discharged from the heat exchanger 10 to approach the target temperature R.

For example, the temperature control apparatus 100 controls the temperature $T_{H\text{-out}}$ of the medium H subject to temperature control to be in a range higher than the target temperature R-0.1°C and lower than the target temperature R+0.1°C by adjusting the temperature SV of the heat medium C. This suppresses a change in the dimension of the coating die 2 caused by the heat of the medium H subject to temperature control and an uneven coating thickness of the medium H subject to temperature control more effectively.

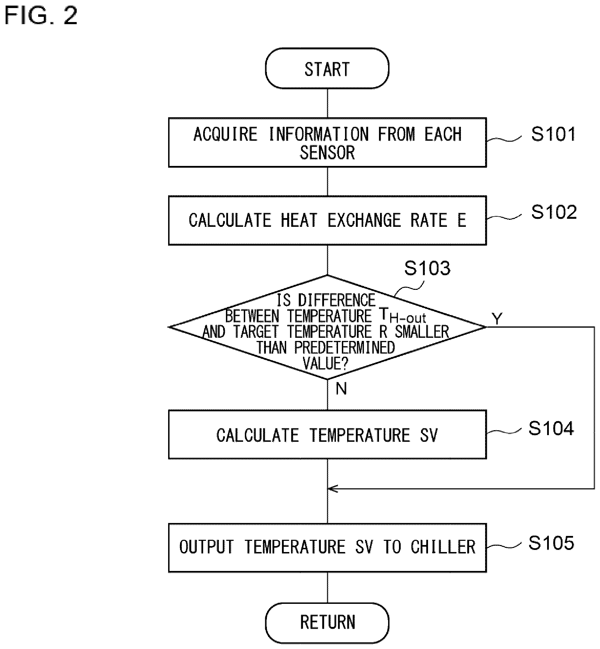

Fig. 2 is a flowchart showing an example of temperature control according to the embodiment. This flow is repeatedly executed by the temperature control apparatus 100 according to a predetermined timing schedule. First, the temperature control apparatus 100 acquires temperature information and flow rate information from each temperature sensor and each flow sensor (S101). The information thus obtained is then substituted into expression (2) to calculate the heat exchange rate E (S102). When the temperature control apparatus 100 does not maintain the heat exchange rate E, the initial heat exchange rate E is calculated by this calculation. When the temperature control apparatus 100 maintains the heat exchange rate E calculated in the previous routine, the heat exchange rate E is updated or corrected by this operation.

The temperature control apparatus 100 then determines whether the difference between the temperature $T_{H\text{-out}}$ acquired from the second temperature sensor 32 and the target temperature R is smaller than a predetermined value (S103). By way of one example, the temperature control apparatus 100 determines whether the temperature $T_{H\text{-out}}$ satisfies a condition R-0.1<$T_{H\text{-out}}$<R+0.1. When the difference between the temperature $T_{H\text{-out}}$ and the target temperature R is equal to or greater than a predetermined value (N in S103), the temperature control apparatus 100 calculates the temperature SV of the heat medium C based on expression (1) (S104). The temperature control apparatus 100 then outputs information on the temperature SV to the chiller 12 (S105) and terminates the routine. This drives the chiller 12 so that the heat medium C reaches the temperature SV. When the difference between the temperature $T_{H\text{-out}}$ and the target temperature R is smaller than a predetermined value (Y in S103), the temperature control apparatus 100 proceeds to step S105 without calculating the temperature SV, outputs information on the temperature SV calculated in the previous routine to the chiller 12 and terminates the routine. Therefore, the drive state of the chiller 12 is maintained. The first routine may be controlled to execute step S104 without exception.

Subsequently, the difference between conventional temperature control using a logarithmic average temperature difference dTlm for calculation of the temperature SV and temperature control according to this embodiment using the maximum temperature difference $d_{Tmax}$ for calculation of the temperature SV will be described. In conventional temperature control, the temperature SV of the heat medium C brought into thermal contact with the medium H subject to temperature control is adjusted based on the following expression (9).

$$\text{Expression (9): } C_{min}(T_{H\text{-in}}-T_{H\text{-out}})=U\times A\times dTlm$$

Referring to expression (9), $C_{min}$, $T_{H\text{-in}}$, $T_{H\text{-out}}$, U and A are as described above. dTlm[°C] is a logarithmic average temperature difference, which is calculated based on the following expression (10).

$$dTlm=\{(T_{H\text{-in}}-T_{C\text{-out}})-(T_{H\text{-out}}-T_{C\text{-in}})\}/\ln\{(T_{H\text{-in}}-T_{C\text{-out}})/(T_{H\text{-out}}-T_{C\text{-in}})\} \qquad \text{Expression (10):}$$

Referring to expression (10), $T_{H\text{-in}}$, $T_{H\text{-out}}$, $T_{C\text{-in}}$, and $T_{C\text{-out}}$ are as described above.

The left side of expression (9) means the amount of heat that the medium H subject to temperature control is deprived of by the heat medium C. Further, the right side of expression (9) means the amount of heat exchange that occurs in the heat exchanger 10. The temperature $T_{H\text{-out}}$ of the medium H subject to temperature control can be replaced by the target temperature R. Further, the temperature $T_{C\text{-in}}$ of the heat medium C can be replaced by the temperature SV of the heat medium C. Therefore, the temperature SV of the heat medium C can be calculated based on expression (9).

The overall heat transfer coefficient U included in expression (9) is an extension of the heat transfer coefficient used in the fields of heat conduction and convective heat transfer. Specifically, the overall heat transfer coefficient U is the reciprocal of a sum of thermal resistance, comprising the thermal conductivity of the wall surface sandwiching the mediums in the heat exchanger 10, the convective heat transfer coefficient between each medium and the wall surface, etc. Therefore, the overall heat transfer coefficient U is a coefficient derived in general heat transfer theory. On the other hand, $C_{min}\times dT_{max}$ on the right side of expression (7) can be defined as the maximum amount of heat exchange $Q_{max}$ in the heat exchanger 10. Further, the left side of expression (7) can be defined as the amount of heat exchange Q that occurs in the heat exchanger 10. Therefore, the heat exchange rate E included in expressions (1) and (7) is defined as the ratio of the amount of heat exchange Q relative to the maximum amount of heat exchange Qmax ($Q/Q_{max}$) in the heat exchanger 10. Therefore, the heat exchange rate E is a coefficient unique to the heat exchanger 10.

Further, the logarithmic average temperature difference dTlm included in expression (9) is an extension of temperature difference used in the fields of heat conduction and convective heat transfer. Specifically, the logarithmic average temperature difference dTlm is obtained by integrating and averaging the local heat transfer balance in the heat exchanger 10 from one end to the other end of the heat exchanger 10. Therefore, the logarithmic mean temperature difference dTlm is a temperature difference derived in general heat transfer theory. On the other hand, the maximum temperature difference $dT_{max}$ included in expression (7) is, as described above, a difference between the temperature of the medium H subject to temperature control flowing into the heat exchanger 10 and the temperature of the heat medium C flowing into the heat exchanger 10. Therefore, the maximum temperature difference $dT_{max}$ is a temperature difference unique to the heat exchanger 10. That is, in temperature control of this embodiment, the temperature SV of the heat medium C and, ultimately, the temperature $T_{H-out}$ of the medium H subject to temperature control is controlled by using, instead of the logarithmic average temperature difference dTlm, the maximum temperature difference $dT_{max}$, which is a coefficient unique to the heat exchanger 10.

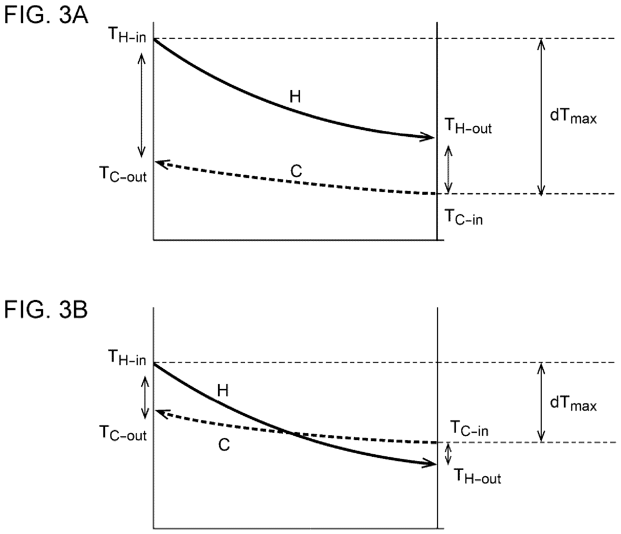

Figs. 3A and 3B are diagrams showing the temperature states of the medium H subject to temperature control and the heat medium C. Fig. 3A shows a case where the temperature difference between the medium H subject to temperature control and the heat medium C is relatively large. Fig. 3B shows a case where the temperature difference between the medium H subject to temperature control and the heat medium C is relatively small. In general heat exchange, the medium H subject to temperature control is always cooled by the heat medium C when the medium H subject to temperature control is at a higher temperature than the heat medium C. Therefore, as shown in Fig. 3A, the temperature difference between the medium H subject to temperature control and the heat medium C is set to be relatively large. In this case, the temperature $T_{H-out}$ of the medium H subject to temperature control does not fall below the temperature $T_{C-in}$ of the heat medium C, and the difference between the temperature $T_{H-out}$ and the temperature $T_{C-in}$ takes a positive value. Further, naturally, the temperature $T_{H-in}$ of the medium H subject to temperature control does not fall below the temperature $T_{C-out}$ of the heat medium C.

When the temperature $T_{H-out}$ of the medium H subject to temperature control is controlled to fit within an extremely small error of, for example, $\pm 0.1°C$ with respect to the target temperature R, on the other hand, it may be necessary to heat the medium H subject to temperature control as well as cooling the medium H subject to temperature control. Therefore, as shown in Fig. 3B, the temperature difference between the medium H subject to temperature control and the heat medium C is set to be relatively small. In this case, the temperature of the medium H subject to temperature control and the temperature of the heat medium C approach an equilibrium state, and the temperature $T_{H-out}$ of the medium H subject to temperature control could fall below the temperature $T_{C-in}$ of the heating medium C. Therefore, the difference between the temperature $T_{H-out}$ and the temperature $T_{C-in}$ could take a negative value. Further, the temperature $T_{H-in}$ of the medium H subject to temperature control could possibly fall below the temperature $T_{C-cut}$ of the heat medium C.

Expression (9) used in conventional temperature control includes a logarithmic average temperature difference dTlm. If the difference between the temperature $T_{H-out}$ and the temperature $T_{C-in}$ or the difference between the temperature $T_{H-in}$ and the temperature $T_{C-out}$ takes a zero or negative value, therefore, the logarithmic average temperature difference dTlm diverges, making normal temperature control difficult. On the other hand, expression (1) used in temperature control of this embodiment does not include a logarithmic function. For this reason, normal temperature control can be stably executed even if the difference between the temperature $T_{H-out}$ and the temperature $T_{C-in}$ or the difference between the temperature $T_{H-in}$ and the temperature $T_{C-out}$ takes a negative value.

As described above, the temperature control apparatus 100 according to this embodiment controls the temperature $T_{H-out}$ of the medium H subject to temperature control discharged from the heat exchanger 10 by adjusting the temperature SV of the heat medium C based on the above expression (1). This makes it possible to control the temperature $T_{H-out}$ of the medium H subject to temperature control more accurately and more stably as compared to conventional feedforward temperature control using the logarithmic average temperature difference dTlm. Further, numerical analysis using the Newtonian method, etc. is necessary when the logarithmic average temperature difference dTlm is used. In temperature control of this embodiment, on the other hand, the temperature SV can be calculated by a simpler algebraic operation. Accordingly, the processing load on the temperature control apparatus 100 can be reduced. It also makes it easier to integrate control into a programmable logic controller (PLC).

Embodiments of the present disclosure have been described above in detail. The embodiment described above is merely a specific example of practicing the present disclosure. The details of the embodiment shall not be construed as limiting the technical scope of the present disclosure. A number of design modifications such as modification, addition, deletion, etc. of constituting elements may be made to the extent that they do not depart from the idea of the present disclosure defined by the claims. New embodiments with design modifications will provide the combined advantages of the embodiment and the variation. Although the details subject to such design modification are emphasized in the embodiment by using phrases such as "of this embodiment" and "in this embodiment", details not referred to as such are also subject to design modification. Any combination of the above constituting elements is also useful as an embodiment of the present disclosure. Hatching in the cross section in the drawings should not be construed as limiting the material of the hatched object.

The invention according to the embodiment described above may be defined by the following items.

[Item 1]

A temperature control apparatus (100) that controls, through heat exchange between a medium (H) subject to temperature control and a heat medium (C) in a heat exchanger (10), a temperature $T_{H-out}$ of the medium (H) subject to temperature control discharged from the heat exchanger 10,
wherein a temperature SV is adjusted based on

$$\text{expression (1): } T_{H-in}-R=E\times(T_{H-in}-SV)$$

[in expression (1), $T_{H-in}$ denotes a temperature of the medium (H) subject to temperature control supplied to the heat exchanger (10), R denotes a target temperature of the medium (H) subject to temperature control discharged from the heat exchanger (10), E denotes a heat exchange rate of the heat exchanger (10), and SV denotes a temperature of the heat medium (C) supplied to the heat exchanger (10)].

[Item 2]

The temperature control apparatus (10) according to Item 1,
wherein the temperature $T_{H-out}$ is controlled to be in a range higher than the target temperature R-0.1°C and lower than the target temperature R+0.1°C by adjusting the temperature SV.

[Item 3]

A temperature control method that controls, through heat exchange between a medium (H) subject to temperature control and a heat medium (C) in a heat exchanger (10), a temperature $T_{H-out}$ of the medium (H) subject to temperature control discharged from the heat exchanger 10,
the method including adjusting a temperature SV based on

$$\text{expression (1): } T_{H-in}-R=E\times(T_{H-in}-SV)$$

[in expression (1), $T_{H-in}$ denotes a temperature of the medium (H) subject to temperature control supplied to the heat exchanger (10), R denotes a target temperature of the medium (H) subject to temperature control discharged from the heat exchanger (10), E denotes a heat exchange rate of the heat exchanger (10), and SV denotes a temperature of the heat medium (C) supplied to the heat exchanger (10)].

INDUSTRIAL APPLICABILITY

The present disclosure can be used in a temperature control apparatus and a temperature control method.

REFERENCE SIGNS LIST

1 coating apparatus, 2 coating die, 4 valve, 6 tank, 8 pump, 10 heat exchanger, 12 chiller, 100 temperature control apparatus, C heat medium H medium subject to temperature control

**Claims**

1. A temperature control apparatus that controls, through heat exchange between a medium subject to temperature control and a heat medium in a heat exchanger, a temperature $T_{H-out}$ of the medium subject to temperature control discharged from the heat exchanger,
wherein a temperature SV is adjusted based on

$$\text{expression (1): } T_{H-in}-R=E\times(T_{H-in}-SV)$$

[in expression (1), $T_{H-in}$ denotes a temperature of the medium subject to temperature control supplied to the heat exchanger, R denotes a target temperature of the medium subject to temperature control discharged from the heat exchanger, E denotes a heat exchange rate of the heat exchanger, and SV denotes a temperature of the heat medium supplied to the heat exchanger].

2. The temperature control apparatus according to Claim 1,
   wherein the temperature $T_{H\text{-}out}$ is controlled to be in a range higher than the target temperature R-0.1°C and lower than the target temperature R+0.1°C by adjusting the temperature SV.

3. A temperature control method that controls, through heat exchange between a medium subject to temperature control and a heat medium in a heat exchanger, a temperature $T_{H\text{-}out}$ of the medium subject to temperature control discharged from the heat exchanger,
   the method including adjusting a temperature SV based on

$$\text{expression (1):} \quad T_{H\text{-}in} - R = E \times (T_{H\text{-}in} - SV)$$

[in expression (1), $T_{H\text{-}in}$ denotes a temperature of the medium subject to temperature control supplied to the heat exchanger, R denotes a target temperature of the medium subject to temperature control discharged from the heat exchanger, E denotes a heat exchange rate of the heat exchanger, and SV denotes a temperature of the heat medium supplied to the heat exchanger].

FIG. 1

EP 4 509 940 A1

FIG. 2

```
                        ┌─────────────┐
                        │    START    │
                        └─────────────┘
                               │
        ┌──────────────────────────────────────┐
        │ ACQUIRE INFORMATION FROM EACH         │~ S101
        │              SENSOR                   │
        └──────────────────────────────────────┘
                               │
        ┌──────────────────────────────────────┐
        │ CALCULATE HEAT EXCHANGE RATE E        │~ S102
        └──────────────────────────────────────┘
                               │
                             S103
                    ╱────────────────────╲
                   ╱  IS DIFFERENCE        ╲
                  ╱ BETWEEN TEMPERATURE T    ╲ Y
                 ╱ AND TARGET TEMPERATURE R   ╲────────┐
                 ╲ SMALLER THAN PREDETERMINED ╱        │
                  ╲       VALUE?             ╱         │
                   ╲────────────────────────╱          │
                               │ N                     │
        ┌──────────────────────────────────────┐       │
        │ CALCULATE TEMPERATURE SV             │~ S104  │
        └──────────────────────────────────────┘       │
                               │◄──────────────────────┘
        ┌──────────────────────────────────────┐
        │ OUTPUT TEMPERATURE SV TO CHILLER     │~ S105
        └──────────────────────────────────────┘
                               │
                        ┌─────────────┐
                        │   RETURN    │
                        └─────────────┘
```

In S103 the decision reads: IS DIFFERENCE BETWEEN TEMPERATURE $T_{H\text{-}out}$ AND TARGET TEMPERATURE R SMALLER THAN PREDETERMINED VALUE?

FIG. 3A

FIG. 3B

## INTERNATIONAL SEARCH REPORT

International application No.

**PCT/JP2023/010148**

**A.    CLASSIFICATION OF SUBJECT MATTER**

*G05D 23/00*(2006.01)i
FI:    G05D23/00 A

According to International Patent Classification (IPC) or to both national classification and IPC

**B.    FIELDS SEARCHED**

Minimum documentation searched (classification system followed by classification symbols)

G05D23/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2009-94163 A (CANON INC.) 30 April 2009 (2009-04-30)<br>paragraphs [0010]-[0057], fig. 1-7 | 1-3 |
| A | JP 10-296075 A (LION CORP.) 10 November 1998 (1998-11-10)<br>paragraphs [0015]-[0023] | 1-3 |
| A | JP 2003-340358 A (FUJI PHOTO FILM CO., LTD.) 02 December 2003 (2003-12-02)<br>paragraphs [0090]-[0108] | 1-3 |
| A | WO 2020/145082 A1 (KELK LTD.) 16 July 2020 (2020-07-16)<br>entire text, all drawings | 1-3 |
| A | JP 2003-295956 A (KOMATSU LTD.) 17 October 2003 (2003-10-17)<br>entire text, all drawings | 1-3 |
| A | WO 2008/078525 A1 (ORION MACHINERY CO., LTD.) 03 July 2008 (2008-07-03)<br>entire text, all drawings | 1-3 |

☐ Further documents are listed in the continuation of Box C.      ☑ See patent family annex.

| | |
|---|---|
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **10 May 2023** | **30 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2023/010148**

| Patent document cited in search report | | | Publication date (day/month/year) | Patent family member(s) | | | Publication date (day/month/year) |
|---|---|---|---|---|---|---|---|
| JP | 2009-94163 | A | 30 April 2009 | US 2009/0090498 A1 paragraphs [0026]-[0078], fig. 1-7 KR 10-2009-0034783 A TW 200931187 A | | | |
| JP | 10-296075 | A | 10 November 1998 | (Family: none) | | | |
| JP | 2003-340358 | A | 02 December 2003 | (Family: none) | | | |
| WO | 2020/145082 | A1 | 16 July 2020 | US 2022/0011793 A1 entire text, all drawings CN 113196199 A KR 10-2021-0084617 A TW 202030568 A | | | |
| JP | 2003-295956 | A | 17 October 2003 | (Family: none) | | | |
| WO | 2008/078525 | A1 | 03 July 2008 | CN 101558270 A KR 10-2009-0106452 A TW 200827639 A JP 2008-309465 A JP 2009-300077 A JP 2010-43855 A | | | |

Form PCT/ISA/210 (patent family annex) (January 2015)

**EP 4 509 940 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003313204 A